# EUROPEAN PATENT APPLICATION

(11) **EP 4 796 973 A1**
(43) Date of publication of application: **26.08.2026**
(21) Application number: 26156688.9
(22) Date of filing: 05.02.2026
(51) Int. Cl.: G02B 17/08, G02B 27/01, G02B 27/28

(54) **CATADIOPTRIC VARI-FOCAL VIRTUAL REALITY DISPLAYS**

(30) Priority: 19.02.2025 US 202563760425 P; 06.06.2025 US 202519231099
(71) Applicant: Samsung Display Co., Ltd., Yongin-si, Gyeonggi-do (KR)
(72) Inventor: APPAN, Bharathwaj, Yongin-si (KR); CHEN, Hui, Yongin-si (KR); HA, Ju Hwa, Yongin-si (KR); KIM, Sang-Ho, Yongin-si (KR)
(74) Representative: Marks & Clerk LLP

(57) **Abstract**

An optical system includes a first lens having a first curved surface and a second curved surface, a second lens including a concave first surface and a flat second surface, a third lens including a first surface and a convex second surface, a reflective polarizer on the second curved surface of the first lens, a quarter waveplate on the flat second surface of the second lens, a display, a circular polarizer on the display and facing the convex second surface of the third lens, and at least one geometric phase lens between the third lens and the circular polarizer.

## Description

### BACKGROUND

### 1. Field

The present disclosure relates to lenses and virtual reality/augmented reality systems.

### 2. Technical Background

Virtual reality (VR) and augmented reality (AR) headsets are becoming increasingly popular for gaming, social media, and/or mobile computing, for example. Comparative VR or AR headsets include a display device and optics configured to enlarge the image generated by the display device (i.e., the optics are configured to generate an enlarged virtual image). The VR/AR headset may include any suitable type of display, such as an LCD or OLED display (e.g., an OLED microdisplay or a µOLED). The configuration of the optics may vary depending on the type of display selected. The configuration of the optics governs the resolution of the virtual image, the field-of-view of the headset, the total track length (i.e., compactness) of the headset, and the eyebox (i.e., the area within which eye pupil movement does not cause significant visual degradation). In general, increasing the track length increases the focal length and the resolution of the virtual image. Comparative optical systems in AR/VR systems utilize only refraction to increase the focal length, which results in the AR/VR headset being bulky and cumbersome for the user to wear.

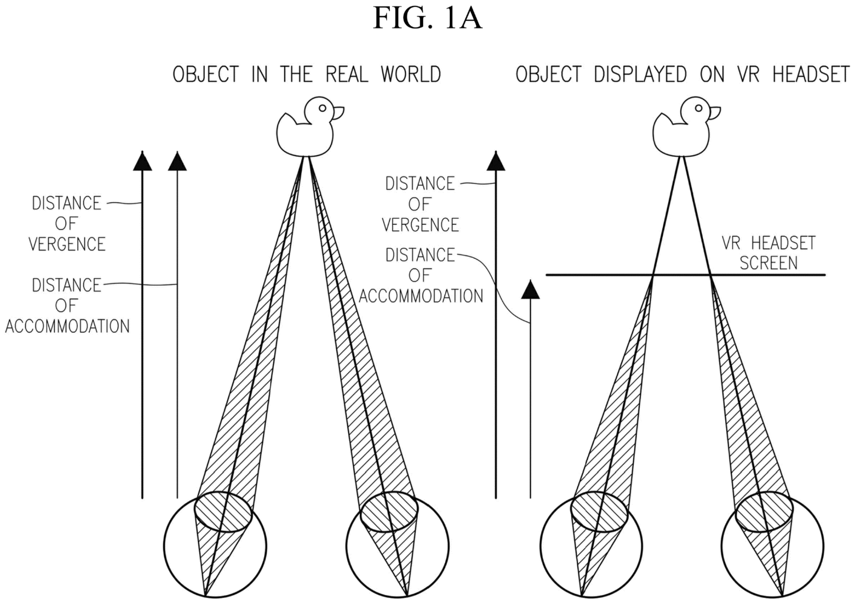

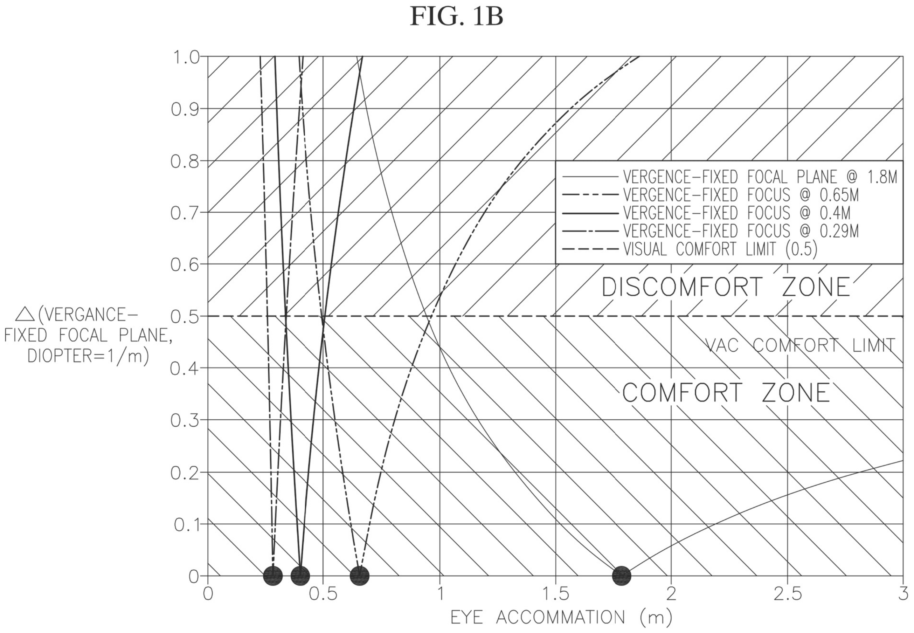

Additionally, as shown in FIG. 1A, comparative AR/VR headsets, which do not utilize aspects of the present disclosure, typically include only one plane of focus. However, scenes displayed by the AR/VR headset commonly contain multiple focal depths. This disparity between the plane of focus of the headset and the multiple planes of focus of the scene causes vergence accommodation conflict (VAC), which is a visual phenomenon that occurs when the brain receives mismatching cues between vergence and accommodation of the eye. VAC may cause the user to experience eye strain. As used herein, the "distance of vergence" is the distance between the object and the individual's eyes in diopters, which is equivalent to m⁻¹, and "distance of accommodation" or "eye accommodation" is the range of distances at which a person can clearly focus on an object using their eye's natural ability to adjust its lens shape. FIG. 1B is a graph depicting the difference between vergence and the fixed focal plane in diopters ("Δ (Vergence - Fixed focal plane, Diopter = 1/m)") as a function of eye accommodation in meters (m) for each of four comparative lenses: (i) a fixed focal plate at 1.8 m; (ii) a fixed focal plate at 0.65 m; (iii) a fixed focal plate at 0.4 m; and (iv) a fixed focal plate at 0.29 m. FIG. 1B also depicts a discomfort zone above a Δ of 0.5 and comfort zone below a Δ of 0.5.

The above information disclosed in this Background section is only for enhancement of understanding of the background of the invention and therefore it may contain information that does not constitute prior art.

### SUMMARY

The present disclosure relates to various embodiments of an optical system (e.g., a catadioptric optical system). In one embodiment, the optical system include a first lens including a first curved surface and a second curved surface; a second lens including a concave first surface and a flat second surface; a third lens including a first surface and a convex second surface; a reflective polarizer on the second curved surface of the first lens; a quarter waveplate on the flat second surface of the second lens; a display; a circular polarizer on the display and facing the convex second surface of the third lens; and at least one geometric phase lens between the third lens and the circular polarizer.

The at least one geometric phase lens may be attached to the display.

The at least one geometric phase lens may be spaced apart from the display by an air gap.

The first surface of the third lens may be flat.

The first surface of the third lens may be curved.

The second curved surface of the first lens may have a spherical convex shape.

The at least one geometric phase lens may be two or more geometric phase lenses.

In another embodiment, the optical system may include a first lens having a first curved surface and a second curved surface; a second lens having a curved first surface and a second surface; a third lens having a first surface and a convex second surface; a reflective polarizer on the second curved surface of the first lens; a quarter waveplate on the second surface of the second lens; a display; a corrective lens on the display and facing the convex second surface of the third lens; and at least one geometric phase lens between the third lens and the corrective lens.

The at least one geometric phase lens may be spaced apart from the corrective lens by an air gap.

The second curved surface of the first lens may have a spherical convex shape.

The corrective lens may be a gradient index (GRIN) micro lens.

The corrective lens may be a curved lens.

The second surface of the second lens may be flat, and the first surface of the third lens may be flat.

The second surface of the second lens may be curved, and the first surface of the third lens may be curved.

The at least one geometric phase lens may be two or more geometric phase lenses.

In another embodiment, the optical system includes a first lens having a first curved surface and a second curved surface; a second lens including a curved first surface and a second surface; a third lens including a first surface and a convex second surface; a reflective polarizer on the second curved surface of the first lens; a quarter waveplate on the second surface of the second lens; a display; a circular polarizer on the display and facing the convex second surface of the third lens; at least one geometric phase lens on the circular polarizer; and a corrective lens on the at least one geometric phase lens.

The corrective lens may be a gradient index (GRIN) micro lens.

The corrective lens may be a curved lens.

The second surface of the second lens may be flat, and the first surface of the third lens may be flat.

The second surface of the second lens may be curved, and the first surface of the third lens may be curved.

This summary is provided to introduce a selection of features and concepts of embodiments of the present disclosure that are further described below in the detailed description. This summary is not intended to identify key or essential features of the claimed subject matter, nor is it intended to be used in limiting the scope of the claimed subject matter. One or more of the described features may be combined with one or more other described features to provide a workable system or method.

At least some of the above and other features of the invention are set out in the claims.

### BRIEF DESCRIPTION OF THE DRAWINGS

In the following section, the aspects of the subject matter disclosed herein will be described with reference to example embodiments illustrated in the figures, in which:
FIG. 1A is a schematic view of a comparative virtual reality (VR) headset having a single, fixed focal plane;
FIG. 1B is a graph depicting the vergence accommodation conflict (VAC) for four different comparative VR headsets each having a single, fixed focal plane;
FIGS. 2A-2B are a perspective view and a block diagram, respectively, of a virtual reality and/or augmented reality (VR/AR) system including a catadioptric lens system according to one embodiment of the present disclosure;
FIGS. 2C-2D are schematic views of a user's pupil during use of the VR/AR system of FIGS. 2A-2B;
FIG. 3 is a side view of a catadioptric lens system according to one embodiment of the present disclosure;
FIG. 4 is a side view of a catadioptric lens system according to one embodiment of the present disclosure;
FIG. 5 is a side view of a catadioptric lens system according to one embodiment of the present disclosure;
FIG. 6A depicts operation of a geometric phase lens (GPL) according to one embodiment of the present disclosure;
FIG. 6B depicts a GPL converting incident light having right-hand circular polarization (RHCP) into light having left-hand circular polarization (LHCP) to produce a real image at a positive focal length; and
FIG. 6C depicts a GPL converting incident light having LHCP into light having RHCP to produce a virtual image at a negative focal length.

### DETAILED DESCRIPTION

The present disclosure relates to various embodiments of a catadioptric lens system and a virtual reality (VR) and/or augmented reality (AR) system including the catadioptric lens system. In one or more embodiments, the catadioptric lens system includes a reflective polarizer and a quarter waveplate that are on different surfaces of the lens system and are therefore not laminated together. The catadioptric lens systems of the present disclosure are configured to exhibit better optical performance, including higher transmission efficiency, greater compactness, improved aberration correction, greater polarization control, and better yield in mass production than comparative lens systems. The catadioptric lens systems of the present disclosure are configured to both reflect and refract the image generated by the digital display, which results in higher resolution of the virtual image with a shorter track length compared to a comparative optical system that utilizes only refraction.

The catadioptric lens systems of the present disclosure also includes one or more geometric phase lenses (GPLs), which are liquid crystal-based lenses. Each of the GPLs is configured to generate two different focal states depending on the polarization direction of the incident light (e.g., a positive focal length for right-hand circular polarization light and a negative focal length for left-hand circular polarization light). In this manner, the catadioptric lens systems of the present disclosure are configured to exhibit multiple and variable foci, which is configured to reduce eye strain and virtual reality sickness of the user which might occur in comparative AR/VR systems due to vergence accommodation conflict (VAC).

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

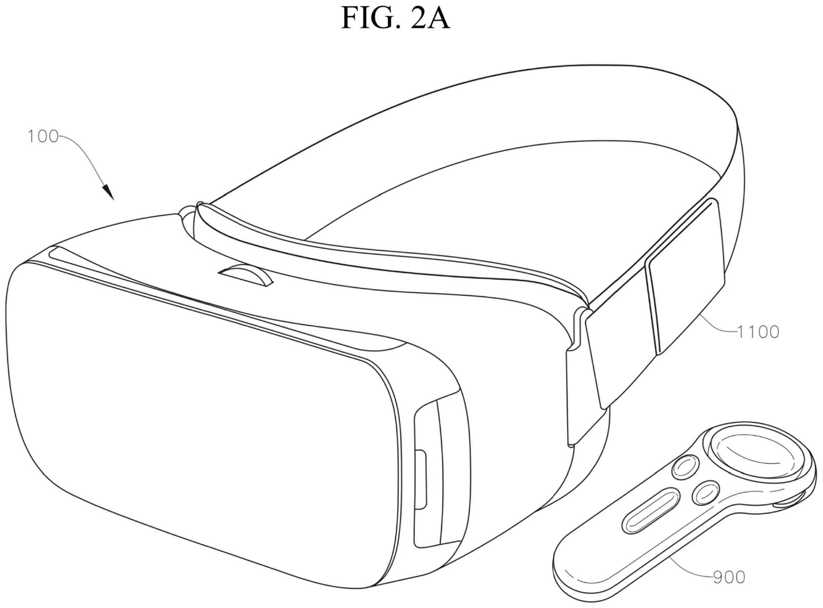

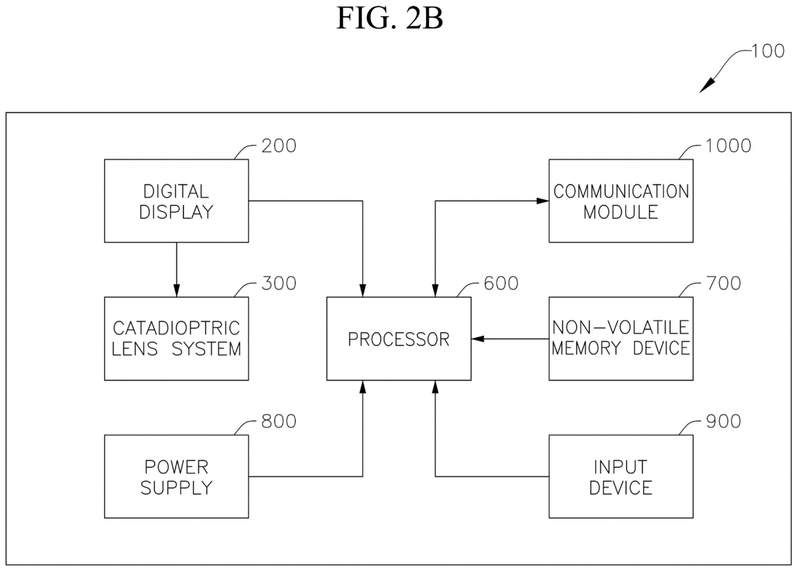

With reference now to FIGS. 2A-2D, a virtual reality and/or augmented reality (VR/AR) system **100** according to one embodiment of the present disclosure includes a digital display **200** (e.g., a digital micro-display, such as an organic light-emitting diode (OLED) display), and a catadioptric lens system **300** (i.e., viewing optics) in front of the digital display **200.** When the VR/AR system **100** is worn by a user, the catadioptric lens system **300** is between the digital display **200** and the user's eye. The catadioptric lens system **300** is configured to both reflect and refract the image generated by the digital display **200** to magnify the image generated by the digital display and thereby generate a virtual image. Utilizing both reflection and refraction results in a higher resolution of the virtual image with a shorter track length compared to a comparative optical system that utilizes only refraction.

In one or more embodiments, the VR/AR system **100** also includes a processor **600** coupled to the digital display **200,** a non-transitory memory device **700** (e.g., non-volatile memory such as flash memory, ferroelectric random-access memory (F-RAM), magnetostrictive RAM (MRAM), FeFET memory, and/or resistive RAM (ReRAM) memory) coupled to the processor **600,** and a power supply **800** (e.g., one or more secondary batteries) coupled to the processor **600.** The non-volatile memory device **700** includes executable instructions (i.e., computer-readable code) which, when executed by the processor **600,** cause the processor **600** to control the display of various images by the display **200.** In one or more embodiments, the VR/AR system **100** may include an input device **900** (e.g., a handheld controller) configured to perform various operations, such as modifying the images displayed by the display **200.** In one or more embodiments, the VR/AR system **100** may include a communication module (e.g., a network adapter) **1000** configured to support establishing a direct (e.g., wired) communication channel or a wireless communication channel between the VR/AR system **100** and an external electronic device (e.g., another electronic device or a server) and performing communication via the established communication channel. In one or more embodiments, the VR/AR system **100** also includes a headband or strap **1100** (e.g., an adjustable band) configured to secure the VR/AR system **100** to a user's head.

The term "processor" is used herein to include any combination of hardware, firmware, and/or software, employed to process data or digital signals. The hardware of a processor may include, for example, application specific integrated circuits (ASICs), general purpose or special purpose central processors (CPUs), digital signal processors (DSPs), graphics processors (GPUs), and programmable logic devices such as field programmable gate arrays (FPGAs). In a processor, as used herein, each function is performed either by hardware configured, i.e., hard-wired, to perform that function, or by more general purpose hardware, such as a CPU, configured to execute instructions stored in a non-transitory storage medium. A processor may be fabricated on a single printed wiring board (PWB) or distributed over several interconnected PWBs. A processor may contain other processors; for example, a processor may include two processors, an FPGA and a CPU, interconnected on a PWB. The processor **600** may include a main processor (e.g., a central processing unit (CPU) or an application processor (AP)), and an auxiliary processor (e.g., a graphics processing unit (GPU), an image signal processor (ISP), a sensor hub processor, or a communication processor (CP)) that is operable independently from, or in conjunction with, the main processor. Additionally or alternatively, the auxiliary processor may be adapted to consume less power than the main processor, or execute a particular function. The auxiliary processor may be implemented as being separate from, or a part of, the main processor. The auxiliary processor may control at least some of the functions or states related to at least one component among the components of the electronic device, instead of the main processor while the main processor is in an inactive (e.g., sleep) state, or together with the main processor while the main processor is in an active state (e.g., executing an application). The auxiliary processor (e.g., an image signal processor or a communication processor) may be implemented as part of another component functionally related to the auxiliary processor.

The communication module **1000** may include one or more communication processors that are operable independently from the processor **600** (e.g., the AP) and supports a direct (e.g., wired) communication or a wireless communication with another device. The communication module **1000** may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device or a server via a short-range communication network (e.g., BLUETOOTH^{™}, wireless-fidelity (Wi-Fi) direct, or a standard of the Infrared Data Association (IrDA)) or a long-range communication network (e.g., a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The communication module **1000** may identify and authenticate the VR/AR system **100** in a communication network, such as the short-range communication network or the long-range communication network, using subscriber information (e.g., international mobile subscriber identity (IMSI)) stored in a subscriber identification module. In one or more embodiments, the communication module **1000** may include an antenna configured to transmit or receive a signal and/or power to or from the outside (e.g., an external electronic device) of the VR/AR system **100.** In one or more embodiments, the communication module **1000** may include one or more antennas, and, therefrom, at least one antenna appropriate for a communication scheme used in the communication network, such as the long-range or the short-range communication network, may be selected, for example, by the communication module **1000.** The signal or the power may then be transmitted or received between the communication module **1000** and the external electronic device via the selected at least one antenna.

Commands or data may be transmitted or received between the VR/AR system **100** and an external electronic device via a server coupled with a long-range communication network. Each of the electronic devices may be a device of a same type as, or a different type, from the VR/AR system **100.** All or some of operations to be executed at the VR/AR system **100** be executed at one or more of the external electronic devices. For example, if the VR/AR system **100** should perform a function or a service automatically, or in response to a request from a user or another device, the VR/AR system **100,** instead of, or in addition to, executing the function or the service, may request the one or more external electronic devices to perform at least part of the function or the service. The one or more external electronic devices receiving the request may perform the at least part of the function or the service requested, or an additional function or an additional service related to the request and transfer an outcome of the performing to the VR/AR system **100.** The VR/AR system **100** may provide the outcome, with or without further processing of the outcome, as at least part of a reply to the request. To that end, a cloud computing, distributed computing, or client-server computing technology may be used, for example.

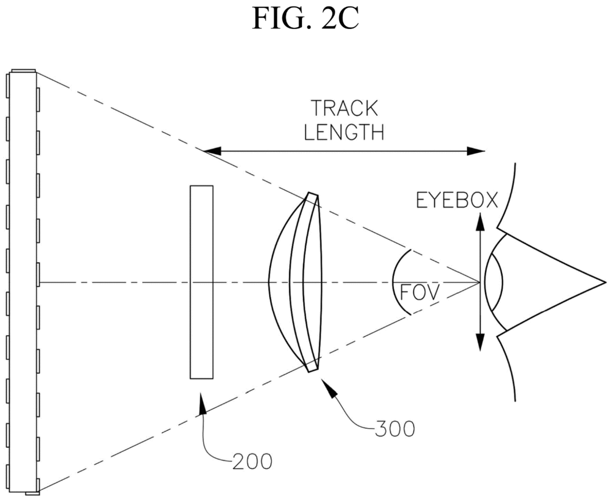

FIG. 2C depicts a user's pupil during operation of the VR/AR system **100.** During operation of the VR/AR system **100,** the image generated by the digital display **200** passes through the catadioptric lens system **300** and is then visible by the user as an enlarged virtual image. As described in more detail below, the catadioptric lens system **300** is configured to generate two or more different focal states (focal depths) depending on the circular polarization direction of the light generated by the digital display **200,** which is configured to eliminate (or at least reduce) eye strain and visual fatigue due to vergence accommodation conflict (VAC). In FIG. 2C, "FOV" refers to a field of view.

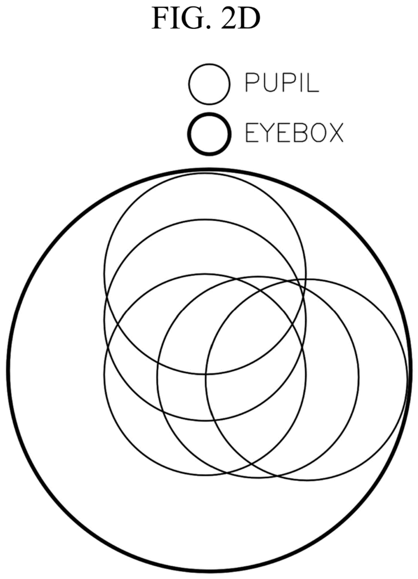

FIG. 2D depicts movement of a user's pupil during operation of the VR/AR system **100.** As shown in FIG. 2D, the catadioptric lens system **300** is configured such that the user's pupil remains with the eyebox, which is the area within which the eye pupil movement does not cause significant visual degradation. In one or more embodiments, the eyebox may have a diameter of approximately 8 mm and the pupil may have a diameter of approximately 4 mm. Systems and methods configured to ensure adequate visual performance even with pupil misalignment, including applying weights to different pupil locations based on the probability of their occurrences (e.g., applying higher weights for on-axis locations than off-axis locations) and optimizing the design, are disclosed in U.S. Patent Application No. 18/658,700, filed on May 8, 2024.

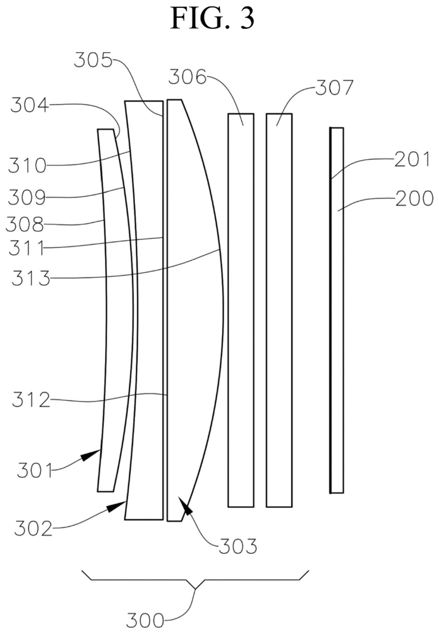

With reference now to FIG. 3, the catadioptric lens system **300** according to one embodiment of the present disclosure includes a first lens **301,** a second lens **302,** a third lens **303,** a reflective polarizer **304,** a quarter wave plate **305,** a first geometric phase lens (GPL) **306,** and a second GPL **307.** In the illustrated embodiment, the digital display **200** includes a circular polarizer **201** facing the catadioptric lens system (i.e., the circular polarizer **201** faces the second GPL **307).** The circular polarizer **201** is configured to circularly polarize the light emitted from the digital display **200.** The quarter wave plate **305** is formed of a birefringent material (e.g., quartz, mica, and/or plastic) that is configured to alter the polarization state of a light wave passing through it (e.g., the quarter wave plate **305** is configured shift the phase of the incident light wave between two perpendicular polarization components, such as turning the circularly polarized light emitted from the circular polarizer **201** into linearly polarized light). The reflective polarizer **304** is configured to transmit a light wave having the desired polarization and to reflect the remainder of the light wave (i.e., the light wave not having the desired polarization).

In the illustrated embodiment, the second lens **302** is between the first lens **301** and the third lens **303,** the third lens **303** is between the second lens **302** and the first GPL **306,** the first GPL **306** is between the third lens **303** and the second GPL **307,** and the second GPL **307** is between the first GPL **306** and the circular polarizer **201** on the digital display **200.** Additionally, in the illustrated embodiment, the first lens **301** includes a first curved surface **308** facing away from the second lens **302** and a second curved surface **309** facing the second lens **302.** In one or more embodiments, the first curved surface 308 of the first lens **301** is aspherical and the second curved surface **309** of the first lens **301** is spherical (i.e., a spherical convex shape).

In the illustrated embodiment, the second lens **302** includes a curved first surface **310** facing the first lens **301** and a flat (or substantially flat) second surface **311** facing away from the first lens **301** and toward the third lens **303.** In one or more embodiments, the curved first surface **310** of the second lens **302** is concave and may be aspherical or spherical.

The third lens **303** includes a first surface **312** facing the second lens **302** and a second curved surface **313** facing away from the second lens **302.** In one or more embodiments in which the second surface **311** of the second lens **302** is flat (or substantially flat), the first surface **312** of the third lens **303** may be flat (or substantially flat). In one or more embodiments in which the second surface **311** of the second lens **302** is curved, the first surface **312** of the third lens **303** may be curved (e.g., the second surface **311** of the second lens **302** and the first surface **312** of the third lens **303** may have matching (or substantially matching) curvatures). In one or more embodiments, the second curved surface **313** of the third lens **303** may be convex and aspherical.

In the illustrated embodiment, the reflective polarizer **304** is laminated on the second curved surface **309** of the first lens **301,** and the quarter wave plate **305** is laminated on the flat (or substantially flat) second surface **311** of the second lens **302.** Accordingly, the reflective polarizer **304** and the quarter wave plate **305** are on two different surfaces (e.g., surfaces that do not face towards each other). Thus, the reflective polarizer **304** and the quarter wave plate **305** are separate and separated from each other by the second lens **302.** Providing the reflective polarizer **304** and the quarter wave plate **305** on two different surfaces is configured to improve performance and efficiency of the catadioptric lens system **300.**

In the illustrated embodiment, the first and second GPLs **306, 307** are between the third lens **303** and the circular polarizer **201.** In one or more embodiments, the first and second GPLs **306, 307** may be coupled to the circular polarizer **201** and the display **200,** or the first and second GPLs **306, 307** may be spaced apart from the circular polarizer **201** and the display **200** by an air gap. The first GPL **306** is proximate to the third lens **303** and the second GPL **307** is between the first GPL **306** and the circular polarizer **201.**

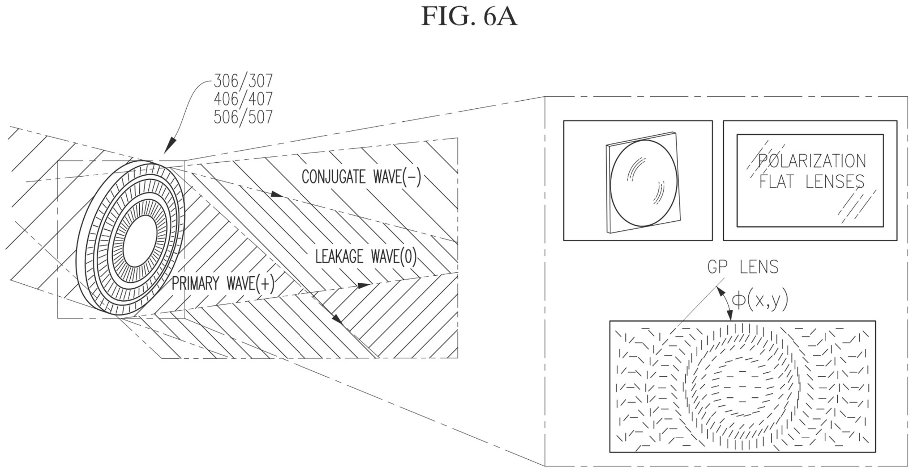

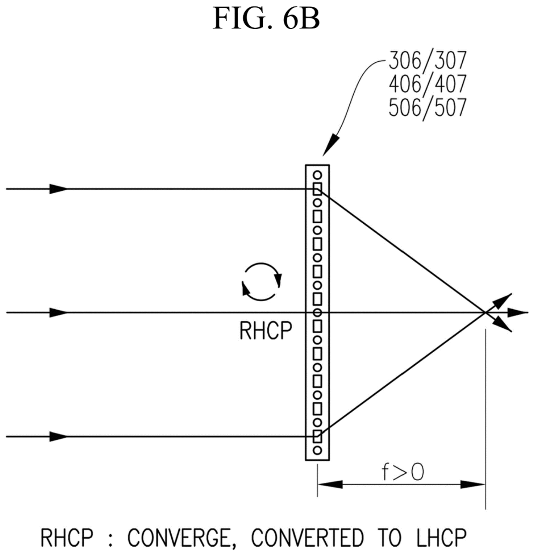

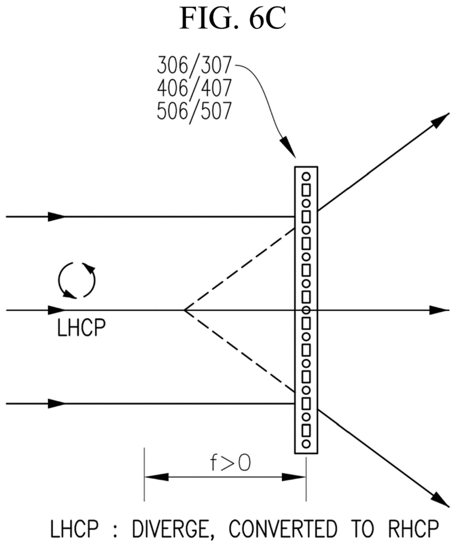

The first and second GPLs **306, 307** are liquid crystal-based lenses that are configured to focus or defocus light depending on the polarization of the light. For instance, the first and second GPLs **306, 307** are each configured to generate a real image at a positive focal length in response to the input light having a right-hand circular polarization. The first and second GPLs **306, 307** are each configured to generate a virtual image (or defocusing) at a negative focal length in response to the input light having a left-hand circular polarization. Accordingly, each of the first and second GPLs **306, 307** are configured to produce two focal states, and together the first and second GPLs **306, 307** are configured to produce four focal states. As shown in FIG. 6A, a GPL (also known as a Pancharatnam-Berry lens) includes a spatially varying pattern that is configured to manipulate the phase of incident light by controlling its polarization state. The polarization flat lenses shown in FIG. 6A may include GPLs. The GPLs are configured to output three distinct waves, a primary wave (+), a conjugate wave (-), and a leakage wave (0), each of which experiences a different geometric-phase shift (or, in the case of the leakage wave, no phase shift). The primary and conjugate waves have fixed (e.g., circular), mutually orthogonal polarizations, and the leakage wave has the same polarization as the incident light. Additionally, as shown in FIG. 6B, a GPL is configured to convert incident light having right-hand circular polarization (RHCP) into light having left-hand circular polarization (LHCP) and to produce a real image at a positive focal length (f>0). As shown in FIG. 6C, a GPL is configured to convert incident light having LHCP into light having RHCP and to produce a virtual image at a negative focal length (*f*<0). Although in the embodiment illustrated in FIG. 3 the catadioptric lens system **300** includes two GPLs (i.e., the first and second GPLs **306, 307),** in one or more embodiments the catadioptric lens system **300** may include any other suitable number of GPLs depending on the number of desired focal states of the catadioptric lens system **300.** The number of focal lengths that the catadioptric lens system **300** is configured to resolve is 2ⁿ, wherein n is the number of GPLs. For instance, in one or more embodiments, the catadioptric lens system **300** may include from one (1) to five (5) or more GPLs, which are configured to generate from 2 to 32 focal states (i.e., 2¹ to 2⁵ focal states).

In operation, the image generated by the digital display **200** passes through the circular polarizer **201** and then through the first and second GPLs **306, 307,** which focuses the image depending on the polarization direction (RHCP or LHCP) of the incident image. The image passing through the first and second GPLs **306, 307** then passes through the third lens **303** and then the quarter wave plate **305** on the second surface **311** of the second lens **302,** which alters the polarization state of the image generated by the digital display **200.** The image having the altered polarization state is then incident on the reflective polarizer **304,** which transmits the portion of the image having the desired polarization state to the first lens **301** and reflects the remaining portion of the image back through the second and third lenses **302, 303.** The portion of the image passing through the first lens **301** is then visible by the user as an enlarged virtual image. In this manner, the catadioptric lens system **300** utilizes both reflection and refraction to generate the enlarged virtual image and utilizes the first and second GPLs **306, 307** to generate multi-focal planes, which is configured to reduce eye strain and virtual reality sickness that might otherwise occur in scenes with multiple focal depths due to vergence accommodation conflict (VAC).

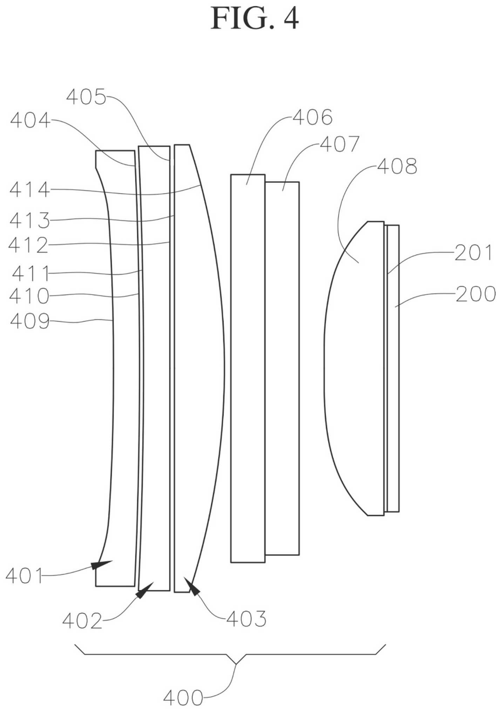

With reference now to FIG. 4, a catadioptric lens system **400** according to another embodiment of the present disclosure includes a first lens **401,** a second lens **402,** a third lens **403,** a reflective polarizer **404,** a quarter wave plate **405,** a first geometric phase lens (GPL) **406,** a second GPL **407,** and a corrective lens **408.** In the illustrated embodiment, the digital display **200** includes a circular polarizer **201** facing the catadioptric lens system (i.e., the circular polarizer **201** faces the corrective lens **408).** The circular polarizer **201** is configured to circularly polarize the light emitted from the digital display **200.** The quarter wave plate **405** is formed of a birefringent material (e.g., quartz, mica, and/or plastic) that is configured to alter the polarization state of a light wave passing through it (e.g., the quarter wave plate **405** is configured shift the phase of the incident light wave between two perpendicular polarization components, such as turning the circularly polarized light emitted from the circular polarizer **201** into linearly polarized light). The reflective polarizer **404** is configured to transmit a light wave having the desired polarization and to reflect the remainder of the light wave (i.e., the light wave not having the desired polarization).

In the illustrated embodiment, the second lens **402** is between the first lens **401** and the third lens **403,** the third lens **403** is between the second lens **402** and the first GPL **406,** the first GPL **406** is between the third lens **403** and the second GPL **407,** the second GPL **407** is between the first GPL **406** and the corrective lens **408,** and the corrective lens **408** is between the second GPL **407** and the circular polarizer **201** on the digital display **200.**

In the illustrated embodiment, the first lens **401** includes a first curved surface **409** facing away from the second lens **402** and a second curved surface **410** facing the second lens **402.** In one or more embodiments, the first curved surface **409** of the first lens **401** is aspherical and the second curved surface **410** of the first lens **401** is spherical (i.e., a spherical convex shape).

In the illustrated embodiment, the second lens **402** includes a curved first surface **411** facing the first lens **401** and a flat (or substantially flat) second surface **412** facing away from the first lens **401** and toward the third lens **403.** In one or more embodiments, the curved first surface **411** of the second lens **402** is concave and may be aspherical or spherical.

The third lens **403** includes a first surface **413** facing the second lens **402** and a second curved surface **414** facing away from the second lens **402.** In one or more embodiments in which the second surface **412** of the second lens **402** is flat (or substantially flat), the first surface **413** of the third lens **403** may be flat (or substantially flat). In one or more embodiments in which the second surface **412** of the second lens **402** is curved, the first surface **413** of the third lens **403** may be curved (e.g., the second surface **412** of the second lens **402** and the first surface **413** of the third lens **403** may have matching (or substantially matching) curvatures). In one or more embodiments, the second curved surface **414** of the third lens **403** may be convex and aspherical.

In the illustrated embodiment, the reflective polarizer **404** is laminated on the second curved surface **410** of the first lens **401,** and the quarter wave plate **405** is laminated on the flat (or substantially flat) second surface **412** of the second lens **402.** Accordingly, the reflective polarizer **404** and the quarter wave plate **405** are on two different surfaces (e.g., surfaces that do not face towards each other). Thus, the reflective polarizer **404** and the quarter wave plate **405** are separate and separated from each other by the second lens **402.** Providing the reflective polarizer **404** and the quarter wave plate **405** on two different surfaces is configured to improve performance and efficiency of the catadioptric lens system **400.**

In the illustrated embodiment, the first and second GPLs **406, 407** are between the third lens **403** and the corrective lens **408.** In one or more embodiments, the first and second GPLs **406, 407** may be spaced apart from the corrective lens **408** by an air gap. The first GPL **406** is proximate to the third lens **403** and the second GPL **407** is between the first GPL **406** and the corrective lens **408.**

In one or more embodiments, the corrective lens **408** may be either a curved lens or a gradient index (GRIN) micro lens. In one or more embodiments, the corrective lens **408** may be directly coupled (e.g., adhered) to the circular polarizer **201** on the display **200.**

The first and second GPLs **406, 407** are liquid crystal-based lenses that are configured to focus or defocus light depending on the polarization of the light. For instance, in one or more embodiments, the first and second GPLs **406, 407** are each configured to generate a real image at a positive focal length in response to the input light having a right-hand circular polarization and to generate a virtual image (or defocusing) at a negative focal length in response to the input light having a left-hand circular polarization. Accordingly, each of the first and second GPLs **406, 407** are configured to produce two focal states, and together the first and second GPLs **406, 407** are configured to produce four focal states. Although in the embodiment illustrated in FIG. 4 the catadioptric lens system **400** includes two GPLs (i.e., the first and second GPLs **406, 407),** in one or more embodiments the catadioptric lens system **400** may include any other suitable number of GPLs depending on the number of desired focal states of the catadioptric lens system **400.** The number of focal lengths that the catadioptric lens system **400** is configured to resolve is 2ⁿ, wherein n is the number of GPLs. For instance, in one or more embodiments, the catadioptric lens system **400** may include from one (1) to five (5) or more GPLs, which are configured to generate from 2 to 32 focal states (i.e., 2¹ to 2⁵ focal states).

In operation, the image generated by the digital display **200** passes through the circular polarizer **201,** the corrective lens **408** on the circular polarizer **201,** and then through the first and second GPLs **406, 407,** which focuses the image depending on the polarization direction (RHCP or LHCP) of the incident image. The image passing through the first and second GPLs **406, 407** then passes through the third lens **403** and then the quarter wave plate **405** on the second surface **412** of the second lens **402,** which alters the polarization state of the image generated by the digital display **200.** The image having the altered polarization state is then incident on the reflective polarizer **404,** which transmits the portion of the image having the desired polarization state to the first lens **401** and reflects the remaining portion of the image back through the second and third lenses **402, 403.** The portion of the image passing through the first lens **401** is then visible by the user as an enlarged virtual image. In this manner, the catadioptric lens system **400** utilizes both reflection and refraction to generate the enlarged virtual image and utilizes the first and second GPLs **406, 407** to generate multi-focal planes, which is configured to reduce eye strain and virtual reality sickness that might otherwise occur in scenes with multiple focal depths due to vergence accommodation conflict (VAC).

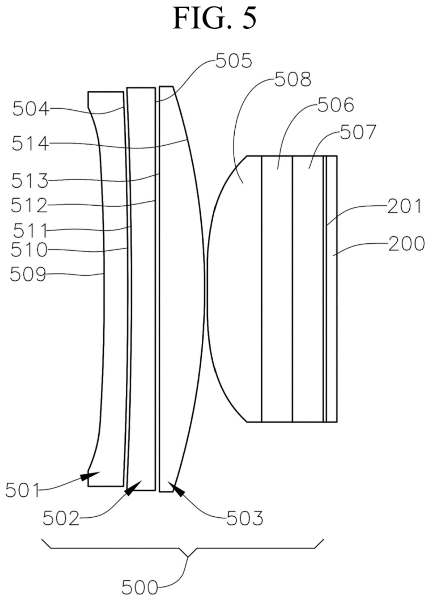

With reference now to FIG. 5, a catadioptric lens system **500** according to another embodiment of the present disclosure includes a first lens **501,** a second lens **502,** a third lens **503,** a reflective polarizer **504,** a quarter wave plate **505,** a first geometric phase lens (GPL) **506,** a second GPL **507,** and a corrective lens **508.** In the illustrated embodiment, the digital display **200** includes a circular polarizer **201** facing the second GPL **507.** The circular polarizer **201** is configured to circularly polarize the light emitted from the digital display **200.** The quarter wave plate **505** is formed of a birefringent material (e.g., quartz, mica, and/or plastic) that is configured to alter the polarization state of a light wave passing through it (e.g., the quarter wave plate **505** is configured shift the phase of the incident light wave between two perpendicular polarization components, such as turning the circularly polarized light emitted from the circular polarizer **201** into linearly polarized light). The reflective polarizer **504** is configured to transmit a light wave having the desired polarization and to reflect the remainder of the light wave (i.e., the light wave not having the desired polarization).

In the illustrated embodiment, the second lens **502** is between the first lens **501** and the third lens **503,** the third lens **503** is between the second lens **502** and the corrective lens **508,** the corrective lens **508** is between the third lens **503** and the first GPL **506,** the first GPL **506** is between the corrective lens **508** and the second GPL **507,** and the second GPL **507** is between the first GPL **506** and the circular polarizer **201** on the digital display **200.**

In the illustrated embodiment, the first lens **501** includes a first curved surface **509** facing away from the second lens **502** and a second curved surface **510** facing the second lens **502.** In one or more embodiments, the first curved surface **509** of the first lens **501** is aspherical and the second curved surface **510** of the first lens **501** is spherical (i.e., a spherical convex shape).

In the illustrated embodiment, the second lens **502** includes a curved first surface **511** facing the first lens **501** and a second surface **512** facing away from the first lens **501** and toward the third lens **503.** In one or more embodiments, the curved first surface **511** of the second lens **502** is concave and may be aspherical or spherical. The second surface **512** of the second lens **502** may be flat (or substantially flat) or curved.

The third lens **503** includes a first surface **513** facing the second lens **502** and a curved second surface **514** facing away from the second lens **502.** In one or more embodiments in which the second surface **512** of the second lens **502** is flat (or substantially flat), the first surface **513** of the third lens **503** may be flat (or substantially flat). In one or more embodiments in which the second surface **512** of the second lens **502** is curved, the first surface **513** of the third lens **503** may be curved (e.g., the second surface **512** of the second lens **502** and the first surface **513** of the third lens **503** may have matching (or substantially matching) curvatures). In one or more embodiments, the second curved surface **514** of the third lens **503** may be convex and aspherical.

In the illustrated embodiment, the reflective polarizer **504** is laminated on the second curved surface **510** of the first lens **501,** and the quarter wave plate **505** is laminated on the second surface **512** of the second lens **502.** Accordingly, the reflective polarizer **504** and the quarter wave plate **505** are on two different surfaces (e.g., surfaces that do not face towards each other). Thus, the reflective polarizer **504** and the quarter wave plate **505** are separate and separated from each other by the second lens **502.** Providing the reflective polarizer **504** and the quarter wave plate **505** on two different surfaces is configured to improve performance and efficiency of the catadioptric lens system **500.**

The first GPL **506** is proximate to the corrective lens **508** and the second GPL **507** is between the first GPL **506** and the circular polarizer **201** on the display **200.** In the illustrated embodiment, the first and second GPLs **506, 507** are coupled to the display **200** (e.g., the second GPL **507** is adhered or bonded directly to the circular polarizer **201** and the first GPL **506** is coupled to the second GPL **507).** Additionally, in the illustrated embodiment, the corrective lens **508** is coupled (e.g., bonded or adhered) to the first GPL **506.** In one or more embodiments, the corrective lens **508** may be either a curved lens or a gradient index (GRIN) micro lens.

The first and second GPLs **506, 507** are liquid crystal-based lenses that are configured to focus or defocus light depending on the polarization of the light. For instance, in one or more embodiments, the first and second GPLs **506, 507** are each configured to generate a real image at a positive focal length in response to the input light having a right-hand circular polarization and to generate a virtual image (or defocusing) at a negative focal length in response to the input light having a left-hand circular polarization. Accordingly, each of the first and second GPLs **506, 507** are configured to produce two focal states, and together the first and second GPLs **506, 507** are configured to produce four focal states. Although in the embodiment illustrated in FIG. 5 the catadioptric lens system **500** includes two GPLs (i.e., the first and second GPLs **506, 507),** in one or more embodiments the catadioptric lens system **500** may include any other suitable number of GPLs depending on the number of desired focal states of the catadioptric lens system **500.** The number of focal lengths that the catadioptric lens system **500** is configured to resolve is 2ⁿ, wherein n is the number of GPLs. For instance, in one or more embodiments, the catadioptric lens system **500** may include from one (1) to five (5) or more GPLs, which are configured to generate from 2 to 32 focal states (i.e., 2¹ to 2⁵ focal states).

In operation, the image generated by the digital display **200** passes through the circular polarizer **201,** the first and second GPLs **506, 507** on the circular polarizer **201,** which focuses the image depending on the polarization direction (RHCP or LHCP) of the incident image, and then through the corrective lens **508.** The image passing through the corrective lens **508** then passes through the third lens **503** and then the quarter wave plate **505** on the flat second surface **512** of the second lens **502,** which alters the polarization state of the image generated by the digital display **200.** The image having the altered polarization state is then incident on the reflective polarizer **504,** which transmits the portion of the image having the desired polarization state to the first lens **501** and reflects the remaining portion of the image back through the second and third lenses **502, 503.** The portion of the image passing through the first lens **501** is then visible by the user as an enlarged virtual image. In this manner, the catadioptric lens system **500** utilizes both reflection and refraction to generate the enlarged virtual image and utilizes the first and second GPLs **506, 507** to generate multi-focal planes, which is configured to reduce eye strain and virtual reality sickness that might otherwise occur in scenes with multiple focal depths due to vergence accommodation conflict (VAC).

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific example teachings discussed above, but is instead defined by the following claims.

Embodiments are set out in the following clauses:
1. An optical system comprising:
   a first lens comprising a first curved surface and a second curved surface;
   a second lens comprising a concave first surface and a flat second surface;
   a third lens comprising a first surface and a convex second surface;
   a reflective polarizer on the second curved surface of the first lens;
   a quarter waveplate on the flat second surface of the second lens;
   a display;
   a circular polarizer on the display and facing the convex second surface of the third lens; and
   at least one geometric phase lens between the third lens and the circular polarizer.
2. The optical system of clause 1, wherein the at least one geometric phase lens is attached to the display.
3. The optical system of clause 1, wherein the at least one geometric phase lens is spaced apart from the display by an air gap.
4. The optical system of any of clauses 1 to 3, wherein the first surface of the third lens is flat.
5. The optical system of any of clauses 1 to 3, wherein the first surface of the third lens is curved.
6. The optical system of any preceding clause, wherein the second curved surface of the first lens has a spherical convex shape.
7. The optical system of any preceding clause, wherein the at least one geometric phase lens is a plurality of geometric phase lenses.
8. An optical system comprising:
   a first lens comprising a first curved surface and a second curved surface;
   a second lens comprising a curved first surface and a second surface;
   a third lens comprising a first surface and a convex second surface;
   a reflective polarizer on the second curved surface of the first lens;
   a quarter waveplate on the second surface of the second lens;
   a display;
   a corrective lens on the display and facing the convex second surface of the third lens; and
   at least one geometric phase lens between the third lens and the corrective lens.
9. The optical system of clause 8, wherein the at least one geometric phase lens is spaced apart from the corrective lens by an air gap.
10. The optical system of clause 8 or clause 9, wherein the second curved surface of the first lens has a spherical convex shape.
11. The optical system of any of clauses 8 to 10, wherein the corrective lens is a gradient index (GRIN) micro lens.
12. The optical system of any of clauses 8 to 11, wherein the corrective lens is a curved lens.
13. The optical system of any of clauses 8 to 12, wherein the second surface of the second lens is flat, and wherein the first surface of the third lens is flat.
14. The optical system of any of clauses 8 to 13, wherein the second surface of the second lens is curved, and wherein the first surface of the third lens is curved.
15. The optical system of any of clauses 8 to 14, wherein the at least one geometric phase lens is a plurality of geometric phase lenses.
16. An optical system comprising:
   a first lens comprising a first curved surface and a second curved surface;
   a second lens comprising a curved first surface and a second surface;
   a third lens comprising a first surface and a convex second surface;
   a reflective polarizer on the second curved surface of the first lens;
   a quarter waveplate on the second surface of the second lens;
   a display;
   a circular polarizer on the display and facing the convex second surface of the third lens;
   at least one geometric phase lens on the circular polarizer; and
   a corrective lens on the at least one geometric phase lens.
17. The optical system of clause 16, wherein the corrective lens is a gradient index (GRIN) micro lens.
18. The optical system of clause 16 or clause 17, wherein the corrective lens is a curved lens.
19. The optical system of any of clauses 16 to 18, wherein the second surface of the second lens is flat, and wherein the first surface of the third lens is flat.
20. The optical system of any of clauses 16 to 18, wherein the second surface of the second lens is curved, and wherein the first surface of the third lens is curved.

## Claims

1. An optical system comprising:
a first lens (301) comprising a first curved surface (308) and a second curved surface (309);
a second lens (302) comprising a concave first surface (310) and a flat second surface (311);
a third lens (303) comprising a first surface (312) and a convex second surface (313);
a reflective polarizer (304) on the second curved surface (309) of the first lens (301);
a quarter waveplate (305) on the flat second surface (311) of the second lens (302);
a display (200);
a circular polarizer (201) on the display (200) and facing the convex second surface (313) of the third lens (303); and
at least one geometric phase lens (306, 307) between the third lens (303) and the circular polarizer (201).

2. An optical system comprising:
a first lens (401) comprising a first curved surface (409) and a second curved surface (410);
a second lens (402) comprising a curved first surface (411) and a second surface (412);
a third lens (403) comprising a first surface (413) and a convex second surface (414);
a reflective polarizer (404) on the second curved surface (410) of the first lens (401);
a quarter waveplate (405) on the second surface (412) of the second lens (402);
a display (200);
a corrective lens (408) on the display (200) and facing the convex second surface (414) of the third lens (403); and
at least one geometric phase lens (406, 407) between the third lens (403) and the corrective lens (408).

3. An optical system comprising:
a first lens (501) comprising a first curved surface (509) and a second curved surface (510);
a second lens (502) comprising a curved first surface (511) and a second surface (512);
a third lens (503) comprising a first surface (513) and a convex second surface (514);
a reflective polarizer (504) on the second curved surface (510) of the first lens (501);
a quarter waveplate (505) on the second surface (512) of the second lens (502);
a display (200);
a circular polarizer (201) on the display (200) and facing the convex second surface (514) of the third lens (503);
at least one geometric phase lens (506, 507) on the circular polarizer (201); and
a corrective lens (508) on the at least one geometric phase lens (506, 507).

4. The optical system of claim 1, wherein the at least one geometric phase lens (306, 307) is attached to the display (200).

5. The optical system of claim 1, wherein the at least one geometric phase lens (306, 307) is spaced apart from the display (200) by an air gap.

6. The optical system of any preceding claim, wherein the first surface (312, 413, 513) of the third lens (303, 403, 503) is flat.

7. The optical system of claim 6, wherein the second surface (311, 412, 512) of the second lens (302, 402, 502) is flat.

8. The optical system of any preceding claim, wherein the first surface (312, 413, 513) of the third lens (303, 403, 503) is curved.

9. The optical system of claim 8 when dependent on claim 2 or claim 3, wherein the second surface (412, 512) of the second lens (402, 502) is curved.

10. The optical system of any preceding claim, wherein the second curved surface (309, 410, 510) of the first lens (301, 401, 501) has a spherical convex shape.

11. The optical system of any preceding claim, wherein the at least one geometric phase lens (306, 307, 406, 407, 506, 507) is a plurality of geometric phase lenses.

12. The optical system of claim 2 or claim 3, or any claim dependent thereon, wherein the at least one geometric phase lens (406, 407, 506, 507) is spaced apart from the corrective lens (408, 508) by an air gap.

13. The optical system of claim 2 or claim 3, or any claim dependent thereon, wherein the corrective lens (408, 508) is a gradient index (GRIN) micro lens.

14. The optical system of claim 2 or claim 3, or any claim dependent thereon, wherein the corrective lens (408, 508) is a curved lens.
